Europäisches Patentamt

European Patent Office

Office européen des brevets

(11) Publication number: **0 499 996 A1**

## EUROPEAN PATENT APPLICATION

(21) Application number: **92102561.5**

(22) Date of filing: **15.02.92**

(51) Int. Cl.⁵: **F16F 13/00, F16F 1/38**

(30) Priority: **19.02.91 JP 24695/91**

(43) Date of publication of application:
**26.08.92 Bulletin 92/35**

(84) Designated Contracting States:
**DE FR GB**

(71) Applicant: **Bridgestone Corporation**
**1-1, Kyobashi 1-Chome Chuo-Ku**
**Tokyo 104(JP)**

(72) Inventor: **Suzuki, Shingo**
**150-7, Kashio-cho, Totsuka-ku**
**Yokohama-shi, Kanagawa(JP)**

(74) Representative: **Fuhlendorf, Jörn, Dipl.-Ing. et al**
**Patentanwälte Dreiss, Hosenthien & Fuhlendorf Gerokstrasse 6**
**W-7000 Stuttgart 1(DE)**

(54) **Vibration isolation apparatus.**

(57) The present invention relates to a vibration isolation apparatus provided, for example, between a vehicle body and an engine to absorb vibration from the engine and other parts of the vehicle. An outer cylinder (12) is mounted on a vibration receiving portion (13). A plurality of elastic members (14) are adhesively bonded to an inner periphery of the outer cylinder (12). Frame bodies are independently fixed in the vicinity of an axis of the outer cylinder (12) so as to support the respective elastic members. An inner cylinder (36) is provided between a plurality of elastic members (14) to force the elastic members via the frame bodies toward the outer cylinder (12). Therefore, no distortion remains on the frame bodies, and compressive force can be applied to the elastic members even if the inner (36) and outer cylinders (12) are relatively displaced due to vibration. Durability of the elastic members can therefore be improved.

FIG. I

## BACKGROUND OF THE INVENTION

### Field of the Invention:

The present invention relates to a bush-type vibration isolation apparatus provided, for example, between a vehicle body and an engine to absorb vibration from the engine and other parts of the vehicle.

### Background Information:

A bush-type vibration isolation apparatus used for a vehicle and other machinery has an inner cylinder and an outer cylinder. An elastic member is bridged between the inner cylinder and the outer cylinder which are connected to a vibration producing portion and a vibration receiving portion, respectively.

This type of vibration isolation apparatus is mainly used for an engine mount, a bush, an engine roll stopper, a center support and other such parts in the vehicle. Additionally, the apparatus has an elastic member which produces an excellent damping effect to absorb high torque which is generated when the engine is started or the vehicle is suddenly accelerated.

The bush-type vibration isolation apparatus has a vibration isolating rubber which is bonded by vulcanization on an outer periphery of the inner cylinder and an inner periphery of the outer cylinder. When the outer and inner cylinders are moved relative to one another due to the generated vibration, tensile stress is caused inside the vibration isolating rubber. Therefore, the apparatus has a problem in that the tensile stress decreases the strength of the bonding of the vibration isolating rubber to the inner and outer cylinders. In addition, the vibration isolation apparatus is made less durable because cracks can form easily in the vibration isolating rubber. To solve such a problem, in general, the outer cylinder is pressed after the bonding by vulcanization to provide a compressive force inside the rubber.

However, since the construction of vibration isolation apparatus has become more complex in recent years, some apparatus have an intermediate cylinder between the inner and outer cylinders. It is difficult to press the intermediate cylinder which has a complex configuration. Furthermore, it is impossible to press the outer cylinder if it has, for example, a collar.

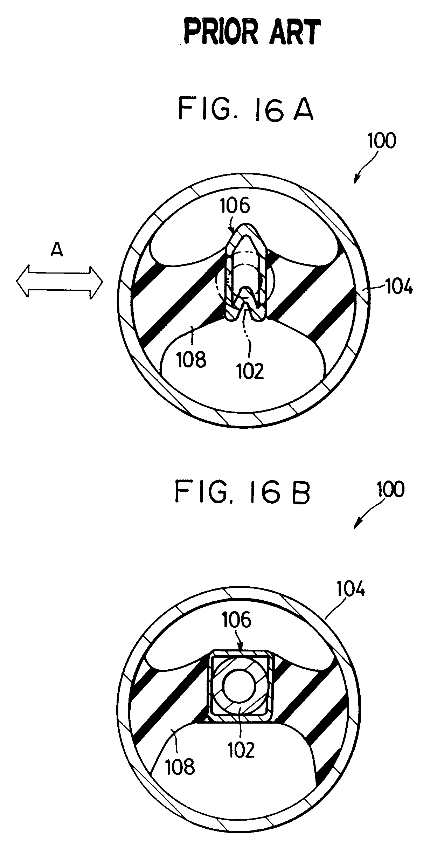

To overcome the above drawbacks, a vibration isolation apparatus 100, as shown in Fig. 16A, is known (see Japanese Patent Application Laid-Open No. 2-113137). In the vibration isolation apparatus 100, a frame body (a supporting means or connecting means) 106, which comprises a thin plate and can be enlarged in diameter, is arranged in an outer cylinder 104 (which may be an intermediate cylinder in a vibration isolation apparatus having an intermediate cylinder). Elastic members 108 are bonded by vulcanization between the outer cylinder 104 (or the intermediate cylinder) and the frame body 106. Thereafter, as shown in Fig. 16B, an inner cylinder 102 is forced into the frame body 106 so that the diameter of the frame body 106 is enlarged toward the outer cylinder 104 (in the direction as shown by the arrow A) and provides the elastic members 108 with compressive force.

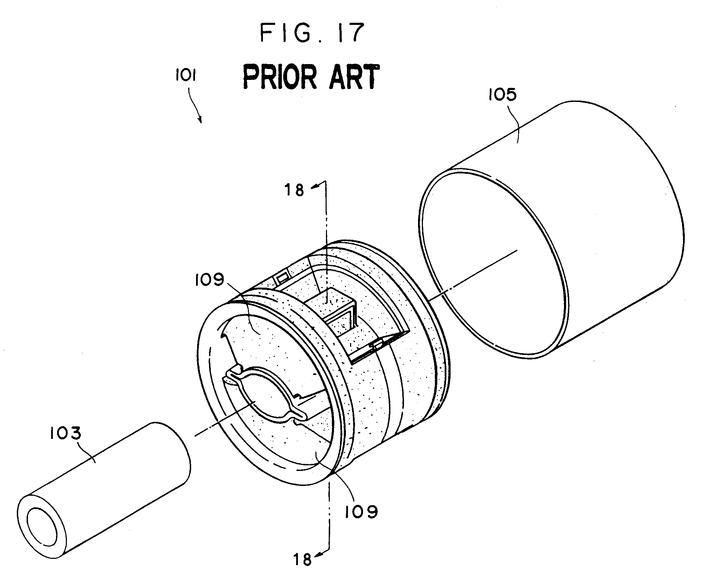

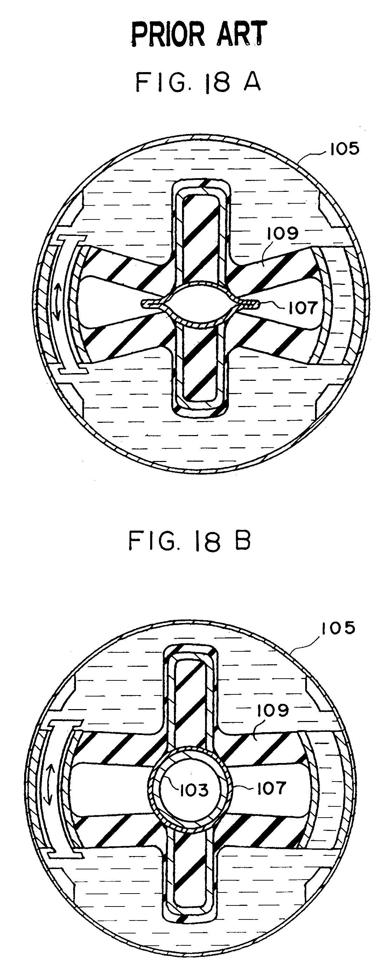

On the other hand, a vibration isolation apparatus 101, as shown in Figs. 17 and 18A, is a fluid filled-type vibration isolation apparatus. In the vibration isolation apparatus 101, a frame body 107 (a supporting means or connecting means) whose a diameter can be enlarged, is arranged inwardly of an outer cylinder 105. Elastic members 109 are bonded by vulcanization between the outer cylinder 105 and the frame body 107. Thereafter, as shown in Fig. 18B, an inner cylinder 103 is forced into the frame body 107 so that the frame body 107 is enlarged in diameter toward the outer cylinder 105 and provides the elastic members 109 with compressive force.

Durability of the elastic members 109 can thus be improved by providing an amount of compressive force suitable for reducing tensile stress which is caused when the inner cylinders 102, 103 are moved.

The vibration isolation apparatus 100, 101, however, should be forced to expand the frame bodies 106, 107 by a large amount to provide the elastic members 108, 109 with compressive force. Furthermore, the frame bodies 106, 107 have many distortions remaining on the bent portions of the frame bodies after the expansion. Accordingly, durability of the frame bodies 106, 107 is reduced. In addition, since the vibration isolation apparatus 100, 101 are designed in such a manner that the inner cylinders 102, 103 are forced into the frame bodies 106, 107, use of the apparatus for an extended period time results in looseness between the frame bodies 106, 107 and the inner cylinders 102, 103, respectively. Therefore, vibration may not be reliably transmitted to the elastic members 108, 109, and a noise may occur. Furthermore, the magnitude of the enlarged diameters of the frame bodies 106, 107 is limited so that, by the durability of the frame bodies 106, 107, distortions remaining in the elastic members 108, 109 may not be reduced and not provide compressive force. On the other hand, if the fluid filled-type vibration isolation apparatus 101 has such looseness, no vibration is translated from the inner cylinder (or the outer cylinder) to the elastic members. As a result, the amount of the fluid flowing through a connecting paths, which communicates between respective fluid chambers, is reduced so that the damping effect on the vibration is lessened.

## SUMMARY OF THE INVENTION

In view of the facts set forth above, it is an object of the present invention to provide a vibration isolation apparatus which can, with no remaining distortion, supply elastic members with compressive force in order to improve durability of the elastic members, and can reliably transmit vibration to the elastic members.

The vibration isolation apparatus of the present invention is mounted, for example, between a vehicle body and an engine to absorb vibration from the engine and other parts of the vehicle. The vibration isolation apparatus comprises a first fitting member, in the form of a cylinder, which is connected to either a vibration producing portion or a vibration receiving portion. The first fitting member has a plurality of elastic members which are fixed along the circumferential direction at respective different positions on an inner periphery of the first fitting member. Supporting means for supporting the elastic members are independently provided for the respective elastic members. A second fitting member is provided between the elastic members by forcing the elastic members in a free state toward the first fitting member and is connected to the other of the vibration producing portion and the vibration receiving portion.

According to the above-mentioned structure of the present invention, if the first fitting member is connected to the vibration generating portion, vibration generated in the vibration generating portion is transmitted to the vibration receiving portion through the elastic members, the supporting means, and the second fitting member. Thus, in this apparatus, vibration can be absorbed by frictional resistance generated in the elastic portions. Further, the second fitting member of the vibration isolation apparatus is assembled in such a manner that a plurality of elastic members is displaced from a free state toward the first fitting member by the respective supporting means which are provided independently. Namely, compressive force can be provided for the elastic portions in advance since the elastic members are forced through the supporting means toward the first fitting member. Accordingly, when the first and second fitting members are moved relatively due to the generated vibration, compressive force can be provided for the elastic member with no remaining distortion of the supporting means. As a result, durability of the elastic members can be improved.

## BRIEF DESCRIPTION OF THE DRAWINGS

Fig. 1 is an exploded perspective view illustrating a first embodiment of a vibration isolation apparatus of the present invention;

Fig. 2 is a perspective view illustrating an expanding metal fitting of the first embodiment of the vibration isolation apparatus of the present invention;

Fig. 3 is a cross-sectional view illustrating the first embodiment of the vibration isolation apparatus of the present invention;

Fig. 4 is a cross-sectional view illustrating the first embodiment of the vibration isolation apparatus of the present invention and elastic members in a free state;

Fig. 5 is a cross-sectional view illustrating a second embodiment of the vibration isolation apparatus of the present invention;

Fig. 6 is an exploded perspective view illustrating a third embodiment of the vibration isolation apparatus of the present invention;

Fig. 7 is a perspective view illustrating an expanding metal fitting of the third embodiment of the vibration isolation apparatus of the present invention;

Fig. 8 is a cross sectional view illustrating a fourth embodiment of the vibration isolation apparatus of the present invention;

Fig. 9 is an exploded perspective view illustrating a fifth embodiment of the vibration isolation apparatus of the present invention;

Fig. 10A is a sectional view taken along line 10A-10A of Fig. 10B.

Fig. 10B is a sectional view taken along line 10B-10B of Fig. 10A.

Fig. 11 is a cross-sectional view illustrating the fifth embodiment of the vibration isolation apparatus of the present invention and elastic members in a free state;

Fig. 12 is a cross-sectional view illustrating a sixth embodiment of the vibration isolation apparatus of the present invention;

Fig. 13 is an exploded perspective view illustrating a seventh embodiment of the vibration isolation apparatus of the present invention;

Fig. 14 is an exploded perspective view illustrating an eighth embodiment of the vibration isolation apparatus of the present invention;

Fig. 15 is a sectional view taken along line 15-15 of Fig. 14, illustrating the eighth embodiment of the vibration isolation apparatus of the present invention;

Figs. 16A and 16B are sectional views illustrating a conventional vibration isolation apparatus;

Fig. 17 is a perspective view illustrating a conventional vibration isolation apparatus;

Fig. 18A is a sectional view taken along line 18-18 of Fig. 17, illustrating a conventional vibration isolation apparatus; and

Fig. 18B is a sectional view corresponding to Fig. 18A, illustrating a conventional vibration isolation apparatus in a state in which an inner cylinder is forced into the apparatus.

## DESCRIPTION OF THE PREFERRED EMBODIMENTS

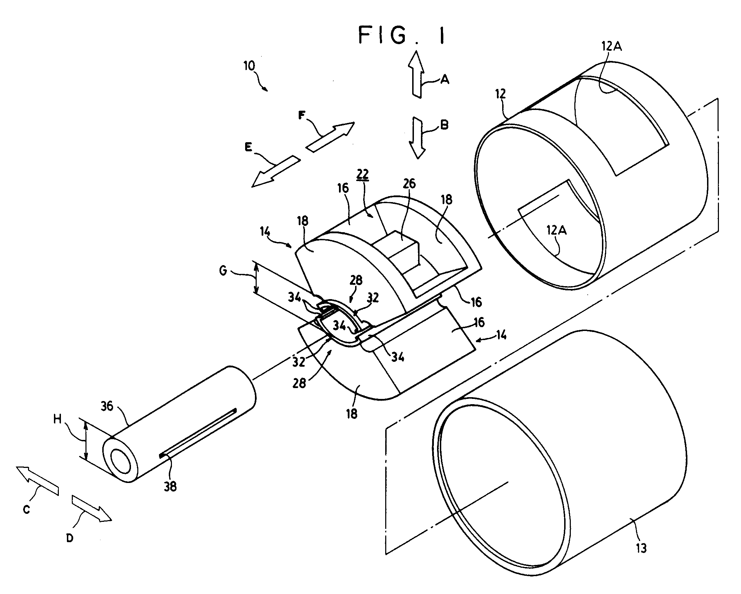

Figs. 1 to 4 show a first embodiment of a vibration isolation apparatus 10 of the present invention.

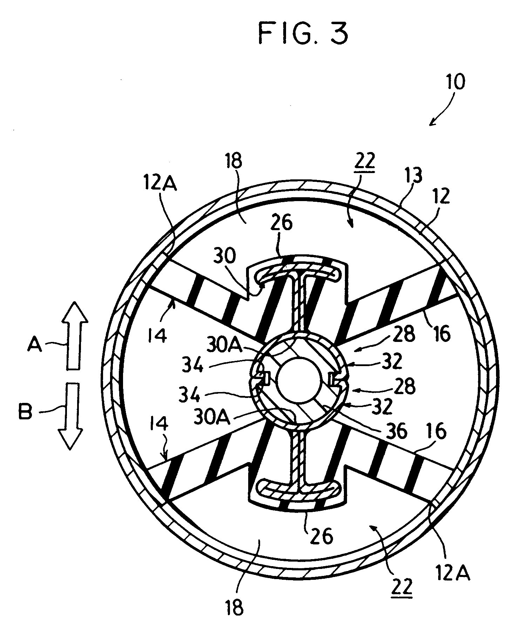

As shown in Figs. 1 and 3, the vibration isolation apparatus 10 has a pair of rubber elastic members 14 within an intermediate cylinder 12 serving as a cylindrical body. The rubber elastic members 14 are arranged at respective upper and lower sides (in the directions indicated by arrows A, B in Figs. 1 and 3) with respect to an axis of the apparatus. The intermediate cylinder 12 is arranged within an outer cylinder 13.

Each elastic member 14 comprises a pair of side wall portions 18, which are arranged in the intermediate cylinder 12 in the vicinity of respective ends thereof and are substantially fan-shaped, and a pair of inner wall portions 16, which connect respective radially extending edges of a pair of the side wall portions 18. In the elastic members 14, a pocket portion 22 is defined by the inner wall portions 16 and the side wall portions 18. Edges of the opening of the pocket portion 22 are bonded by vulcanization to an inner periphery of the intermediate cylinder 12. The intermediate cylinder 12 has a pair of openings 12A which oppose each other with respect to the axis and correspond to the pocket portions 22. The intermediate cylinder 12 is forced into the outer cylinder 13, and a drawing process is executed to press both ends of the outer cylinder 13 inwardly so that the intermediate cylinder 12 is fixed in the outer cylinder 13. Further, the elastic members 14 each have a projection 26 projecting outwardly in the radial direction of the intermediate cylinder 12 from the bottom of the pocket portion 22 of the elastic members 14. When the elastic members 14 are vibrated in the directions in which the projections 26 project (in the directions indicated by arrows A, B in Figs. 1 and 3), the projections 26 limit the amplitude of the vibration.

In addition, the elastic members 14 have expanding metals fittings 28 serving as respective connecting means at respective ends on the sides of the axis of the vibration isolation apparatus 10. An inner cylinder 36, serving as a supporting member, is arranged between the expanding metals fittings 28. As shown in Fig. 1, the inner cylinder 36 is provided with a pair of grooves 38 along the axial direction at longitudinally intermediate portions on the right and left sides thereof on the sides in the directions indicated by arrows C, D in Fig. 1.

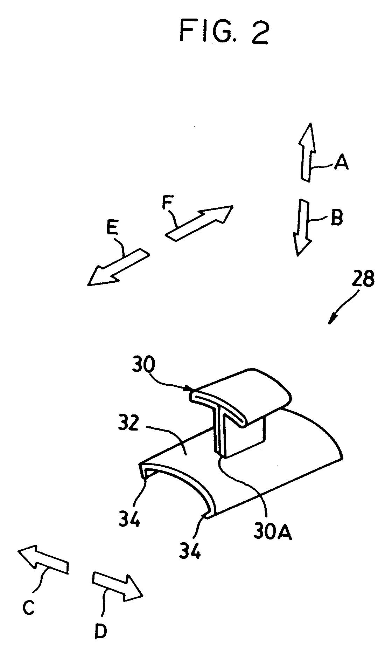

The expanding metal fitting 28, which is made from a steel plate, comprises a fixing portion 30 and supporting portion 32 as shown in Fig. 2. The fixing portion 30 has a substantially T-shaped cross section. As shown in Fig. 3, the fixing portion 30 having an end 30A arranged on the side of the axis, is fitted into the projection 26. The supporting portion 32 is fixed at the end 30A of the fixing portion 30. The supporting portion 32 has a substantially arc-shaped form which corresponds to the outer periphery of the inner cylinder 36, and has a pair of claw portions 34 whose respective transverse ends (in the directions indicated by arrows C, D in Figs. 1 and 2) are bent in forward the sides of the axis. The claw portions 34 are respectively fitted into the grooves 38 of the inner cylinder 36. Therefore, the inner cylinder 36 is prevented from rotating about the axis of the elastic members 14 and from moving in the axial direction. Further, the respective elastic members 14 are connected with each other via the expanding metals fittings 28 and the inner cylinder 36.

The process for manufacturing the vibration isolation apparatus of the embodiment will now be described.

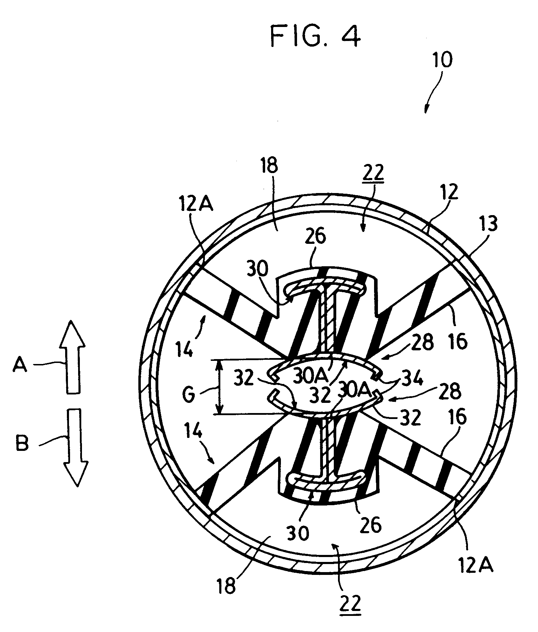

As shown in Figs. 1 and 4, the pair of elastic members 14 are arranged in the intermediate cylinder 12 such that the expanding metals fittings 28 oppose each other. The edges of the opening of the elastic members 14 are respectively positioned to correspond to the openings 12A and are thereafter bonded by vulcanization to the inner periphery of the intermediate cylinder 12. After being bonded by vulcanization, the elastic members 14 are set in a free state such that a distance between the inner peripheries on the side of the axis of the respective supporting portions 32 (dimension G in Figs. 1 and 4) is smaller than the outer diameter of the inner cylinder 36 (dimension H in Fig. 1).

Next, the pair of expanding metals fittings 28 are moved away from each other (in the directions indicated by arrows A, B), and the inner cylinder 36 is arranged between the pair of the expanding metals fittings 28. The supporting portions 32 of the expanding metals fittings 28 are curved corresponding to the outer periphery of the outer cylinder 36 so that the claw portions 34 of the expanding metals fittings 28 are engaged into the grooves 38 of the inner cylinder 36. As a result, the inner cylinder 36 can be rigidly fixed by the expanding metals fittings 28 to the elastic members 14, and compressive force can be generated when the elastic members 14 are pressed toward the intermediate cylinder 12.

The operation of the embodiment of the present invention will be described.

If the outer cylinder 13 is mounted on a vehicle body and the inner cylinder 36 is connected to an engine (not shown), engine vibration is transmitted through the inner cylinder 36 to the elastic members 14. Simultaneously, the engine vibration can be absorbed by inner frictional resistance which is caused according to expansion and contraction of the elastic members 14. As a result, vibration transmitted to the vehicle body can be damped.

Additionally, since compressive force is provided for the elastic members 14 in advance, the compressive force decreases tensile stress acting on the elastic members 14 when the inner cylinder 36 moves. Accordingly, it is difficult to form cracks in the elastic members 14 and separation of surfaces bonded by vulcanization can be avoided. As a result, durability of the vibration isolation apparatus 10 can be improved. Furthermore, since the claw portions 34 of the expanding metals fittings 28 are rigidly fitted into the grooves 38 of the inner cylinder 36, the inner cylinder 36 is reliably supported by the elastic members 14.

Moreover, when the magnitude of relative movement between the intermediate cylinder 12 and the inner cylinder 36 in the directions indicated by arrows A, B in Fig. 1 becomes extremely large, the projections 26 contact the inner periphery of the outer cylinder 13 so as to limit the magnitude of the relative movement. Therefore, no large tensile force acts on the elastic members 14 so that generation of cracks and separation of portions which are adhesively bonded can be avoided.

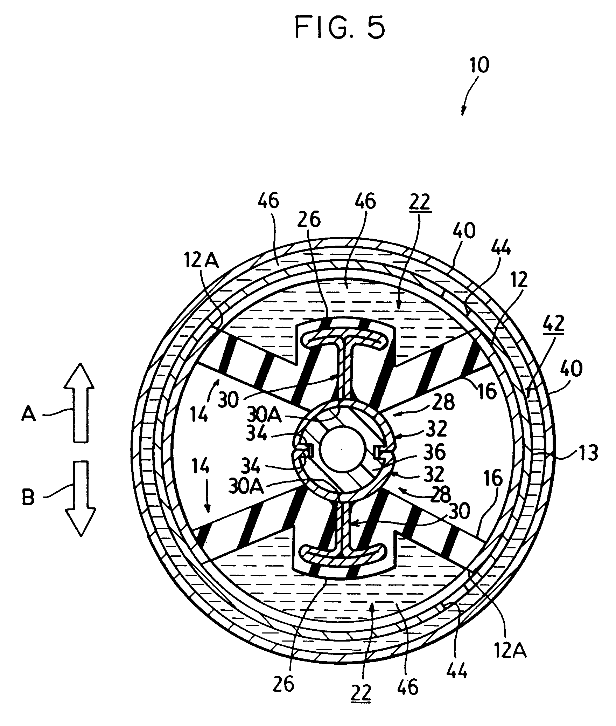

Fig. 5 illustrates a second embodiment of a vibration isolation apparatus 10 of the present invention. In this embodiment, the same reference numerals are used for structures similar to those of the first embodiment, and description of the structures is omitted.

In the second embodiment, a cylindrical member 40 is arranged outside the outer cylinder 13 coaxially with the outer cylinder 13. The respective axial ends of the outer cylinder 13 and those of the cylindrical member 40 are connected by and tightly covered by sealing members (not shown). A ring path 42 is defined between the outer cylinder 13 and the cylindrical member 40. Furthermore, the outer cylinder 13 has holes 44 at positions corresponding respectively to the pocket portions 22 of the elastic members 14. Fluid 46 such as silicone oil is filled into the pocket portions 22 and the ring path 42.

In the vibration isolation apparatus 10, elastic members 14 are connected with each other via the expanding metals fittings 28 and the inner cylinder 36. Consequently, if the inner cylinder 36 is vertically vibrated (in the directions indicated by arrows A, B in Fig. 5) with respect to the outer cylinder 13, one of the elastic members 14 receives compressive force and the other of the elastic members 14 receives tensile force. Therefore, positive pressure acts on the fluid 46 which is filled into the pocket portion 22 of one of the elastic members 14, and negative pressure acts on the fluid 46 which is filled into the pocket portion 22 of the other elastic member 14. The fluid 46 therefore flows easily through the ring path 42. As a result, in the second embodiment of the vibration isolation apparatus 10, vibration can be absorbed by the inner frictional resistance of the elastic members 14. Furthermore, absorption of the vibration can be improved by flow resistance which is generated when the fluid 46 flows back and forth through the ring path 42.

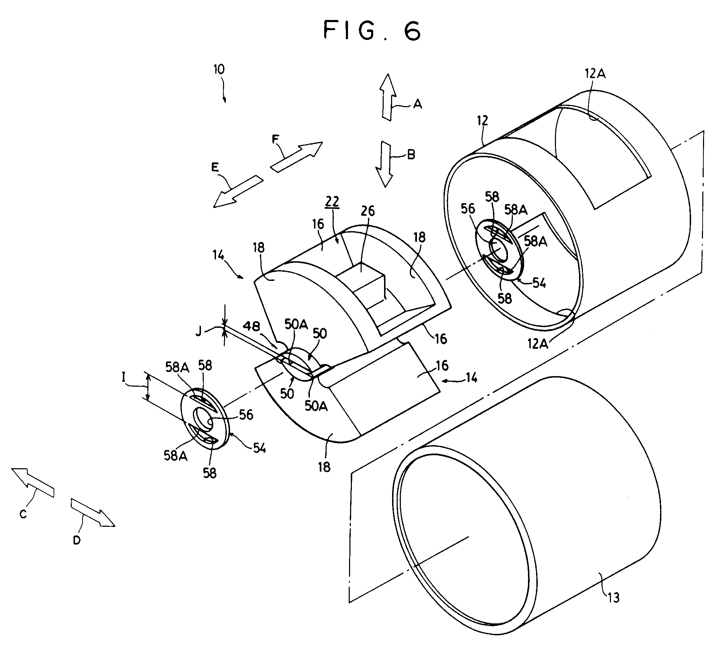

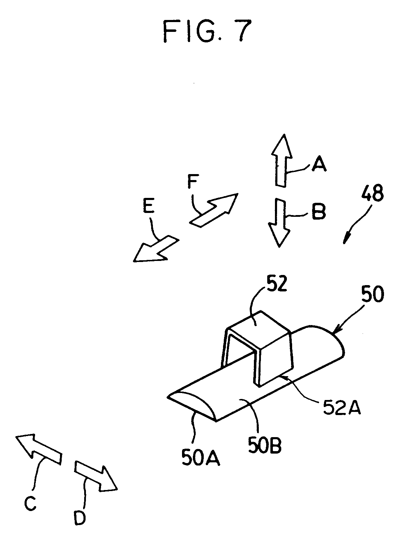

Figs. 6 and 7 illustrate a third embodiment of a vibration isolation apparatus 10 of the present invention. In this embodiment, the same reference numerals are used for structures construction similar to those of the first embodiment, and description of the structures is omitted.

As shown in Fig. 6, the pair of elastic members 14 of the third embodiment are provided with a pair of expanding metals fittings 48 serving as connecting means, in place of the pair of the expanding metals fittings 28 shown the first embodiment. As shown in Fig. 7, the expanding metal fitting 48 comprises supporting portion 50 and fixing portion 52. The supporting portion 50 is formed of a bar-shaped member having a semicircular-shaped cross section and is arranged with plane portions 50A directed toward the axis. On the other hand, the fixing portion 52 is fitted into the projection 26. The fixing portion 52 is manufactured from a steel plate having a substantially "U" shaped cross section and is fixed on an arc portion 50B of the supporting portion 50 at both ends 52A of the fixed portion 52.

As shown in Fig. 6, supporting washers 54 serving as supporting members, are mounted on the respective longitudinal ends (in the directions as shown by arrows E, F in Fig. 6) of the expanding metals fittings 48. The supporting washers 54 comprise disk-shaped steel plates and have through-holes 56 at the respective centers thereof, into which a bolt (not shown) is inserted. Furthermore, a pair of semicircular holes 58 corresponding to the supporting portions 50, are provided at the respective upper and lower sides (in the directions indicated by the arrows A, B in Fig. 6) with respect to the through-holes 56. The upper (on the side in the direction of arrow A in Fig. 6) supporting portion 50 of the elastic member 14 is fitted into the upper (on the side in the direction of arrow A in Fig. 6) semicircular hole 58. Similarly, the lower (on the side in the direction of arrow B in Fig. 6) supporting portion 50 of the elastic member 14 is fitted into the lower (on the side in the direction of arrow B in Fig. 6) semicircular hole 58. The elastic members 14 are thus, connected to each other via the pair of the expanding metals fittings 48 and the pair of the supporting washers 54.

The elastic members 14 are bonded by vulcanization to the inner periphery of the intermediate cylinder 12. The elastic members 14 are set in a free state such that a distance (dimension J in Fig. 6) between the respective plane portions 50A of the supporting portions 50 is smaller than a distance (dimension I in Fig. 6) between straight line portions 58A of the semicircular holes 58 of the supporting washer 54. Accordingly, when the supporting portions 50 are mounted in the supporting washer 54, the supporting washer 54 presses the elastic member 14 toward the intermediate cylinder 12 to provide compressive force. Therefore, as in the case of the first embodiment of the vibration isolation apparatus 10, it is difficult for cracks to form in the elastic member 14 and separation of surface adhesively bonded by vulcanization can be avoided. As a result, durability of the vibration isolation apparatus 10 can be improved.

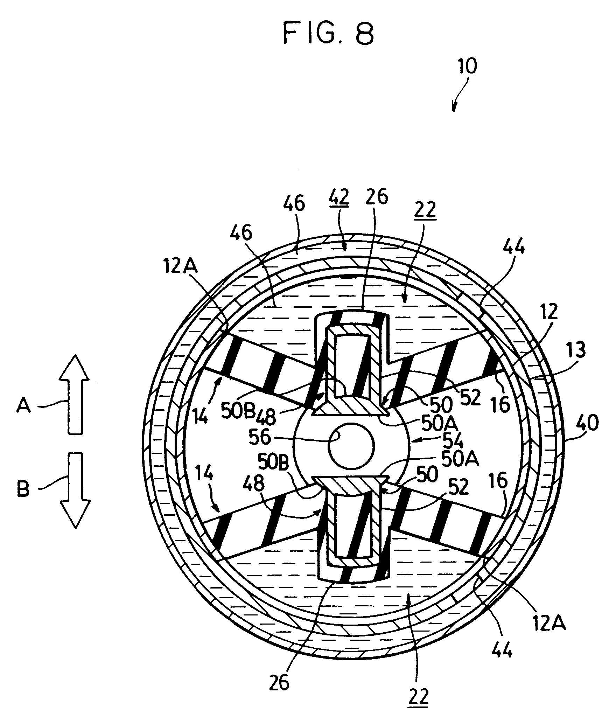

Fig. 8 illustrates a fourth embodiment of the vibration isolation apparatus 10 of the present invention. In this embodiment, the same reference numerals are used for structures similar to those of the first and second embodiments, and description of the structures is omitted.

In this embodiment, the cylindrical member 40 is arranged outside the outer cylinder 13, as in the third embodiment. The respective ends of the outer cylinder 13 and those of the cylindrical member 40 are connected by and tightly covered by a sealing member (not shown). In the vibration isolation apparatus 10 of the fourth embodiment, as in the case of the second embodiment, an upper (on the side in the direction of arrow A in Fig. 8) elastic member 14 and a lower (on the side in the direction of arrow B in Fig. 8) elastic member 14 are connected with each other via the supporting portions 50 and the supporting washers 54. The fluid 46 is thus easily flow through the ring path 42. As a result, vibration can be absorbed by the inner frictional resistance of the elastic members 14. Further, absorption of the vibration can be improved by flow resistance which is generated when the fluid 46 flows back and forth through the ring path 42.

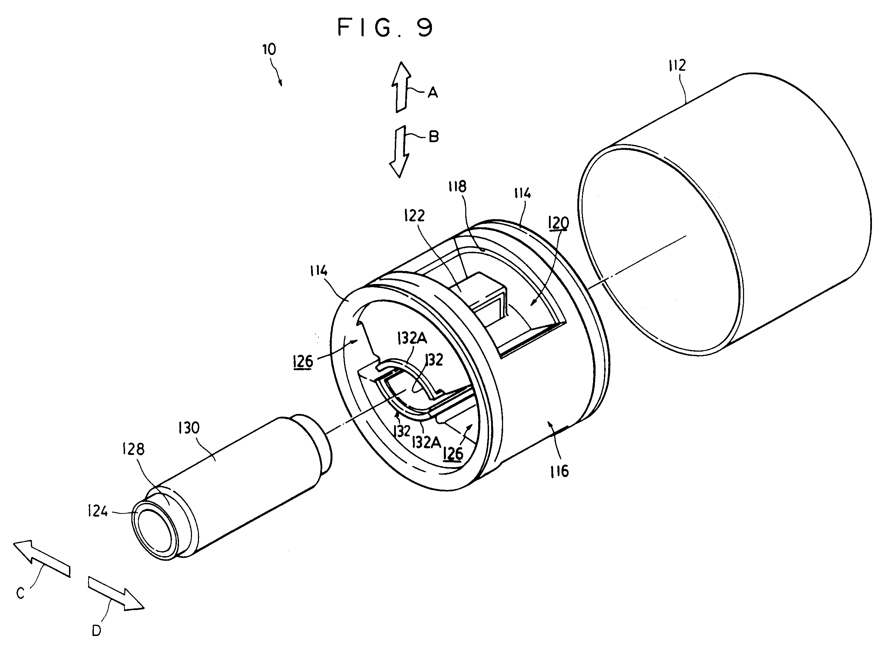

Figs. 9 through 11 illustrate a fifth embodiment of the vibration isolation apparatus of the present invention.

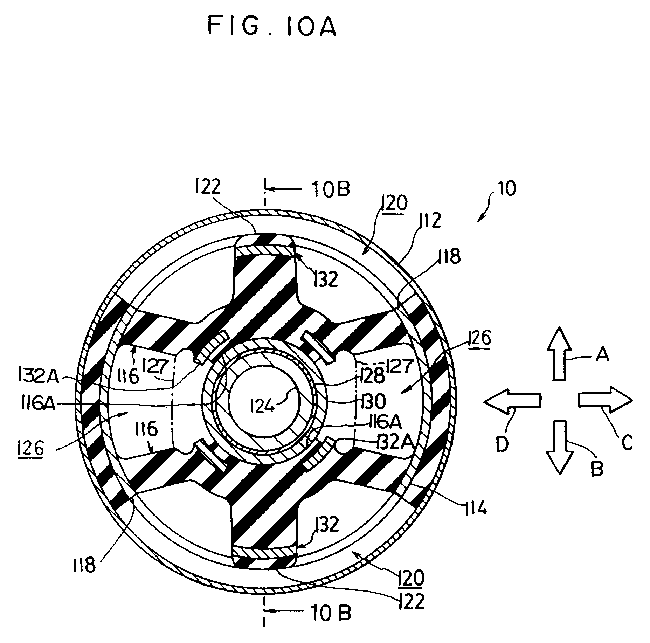

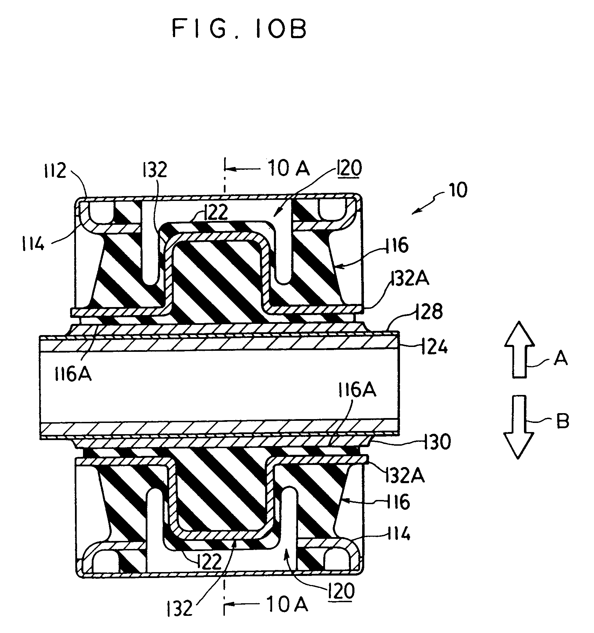

As shown in Figs. 9, 10A, and 10B, the vibration isolation apparatus 10 has an intermediate cylinder 114, serving as a cylindrical member, which is coaxially arranged in an outer cylinder 112. Both ends of the intermediate cylinder 114 are formed as flange shapes ends extending outwardly in the radial direction. Elastic members 116 are bonded by vulcanization to the intermediate cylinder 114. Further, the intermediate cylinder 114 is fixed inside the outer cylinder 112 by pressing both ends of the outer cylinder 112 inwardly.

The intermediate cylinder 114 has openings 118 which are respectively provided at the top and bottom (in the directions indicated by arrows A, B in Figs. 9, 10A, and 10B) with respect to the axis. The elastic members 116 are each provided with a pocket portion 120 which communicate with the openings 118. The pocket portions 120 are blocked by the outer cylinder 112 so as to be cut off from the outer portions. Further, the elastic members 116 are provided with projections 122 in the pocket portions 120 such that they are respectively projecting upward and downward (in the directions indicated by arrows A, B in Figs. 9, 10A, and 10B) and are used for to contact the outer cylinder 112.

On the other hand, an inner cylinder 124, serving as a supporting member, is axially arranged at the center of the elastic members 116. A thin-layer rubber 128 is provided on the outer periphery the inner cylinder 124 and is more flexible than the elastic member 116. A cylinder 130 formed by resin molding is provided on the outer periphery of the thin-layer rubber 128. A part of the outer periphery of the cylinder 130 is fixed by arc surfaces 116A of the elastic members 116. A pair of axial through-holes 126 are formed for the elastic members 116 in the intermediate cylinder 114 at respective position to the right and left of the inner cylinder 124 (in the directions indicated by arrows C, D in Figs. 9 and 10A).

Furthermore, a pair of expanding frames 132 is embedded in the elastic members 116 to serve as connecting means at upper and lower positions with respect to the inner cylinder 124. The expanding frames 132 comprise arc portions 132A which are arc, shaped and are located on the side of the axis along the outer periphery of the inner cylinder 124. The longitudinally intermediate portions of the arc portions 132A are partially projected to have substantially "U" shaped sections and are fitted into the projections 122.

The process for manufacturing the vibration isolation apparatus 10 of the embodiment and the operation will now be described.

First, the expanding frames 132 are arranged at predetermined positions in the intermediate cylinder 114, and the elastic members 116 are bonded by vulcanization to the expanding frame 132 and the intermediate cylinder 114.

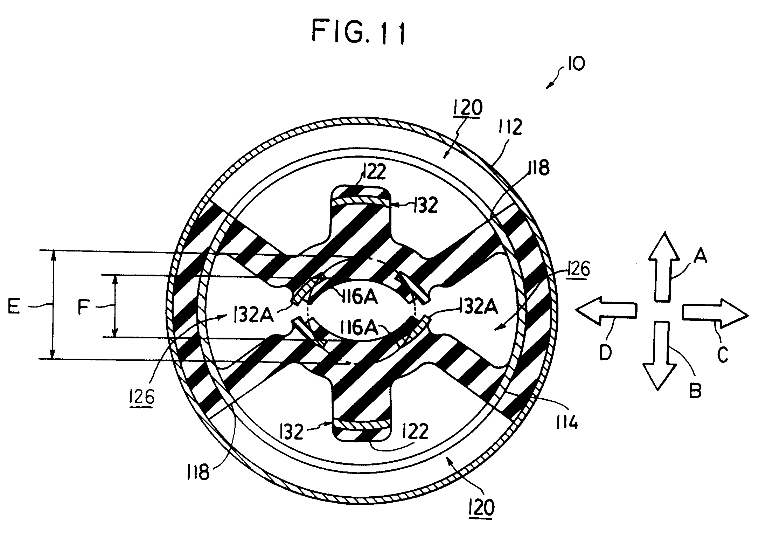

As shown in Fig. 11, the elastic members 116 are set in a free state such that a distance (dimension F in Fig. 11) between respective arc surfaces 116A is smaller than an outer diameter (dimension E in Fig. 11) of the inner cylinder 124 including the thin-layer rubber 128.

Next, the pair of expanding frames 132 are moved away from each other, and the center of the elastic members 116 and the through-holes 126 are enlarged in their diameters. The inner cylinder 124, provided with the thin-layer rubber 128 on the outer periphery thereof, is fitted into the center of the intermediate cylinder 114. Therefore, the elastic members 116, arranged in the intermediate cylinder 114, are pressed toward the intermediate cylinder 114. It is preferable to apply adhesive in advance so that resin can easily be adhesively bonded to the surface of the thin-layer rubber 128 of the inner cylinder 124 and the surface of the elastic members 116 on the side of the axis.

As shown in Fig. 10A, a pin of a resin molding apparatus (not shown) is inserted and fixed into the inner cylinder 124. Additionally, mold 127 of the resin molding apparatus (as shown by imaginary lines in Fig. 10A) are inserted Into the respective through-holes 126. The arc portion 132A of the expanding frame 132 is fixed to the mold 127. Mold surfaces are thus defined by the arc surfaces 116A of the elastic members 116, the outer periphery of the thin-layer rubber 128 on the inner cylinder 124, and the mold 127. Further, cylindrical spaces are defined by the arc surfaces 116A, the mold 127, and the outer periphery of the thin-layer rubber 128 on the inner cylinder 124. Thereafter, a resin is filled into the cylindrical space which is defined by the arc surface 116A, the mold 127, and the outer periphery of the thin-layer rubber 128 on the inner cylinder 124 to form the cylinder 130. Accordingly, the thin-layer rubber 128 on the inner cylinder 124 and the elastic members 116 are bonded by vulcanization to the cylinder 130 and are connected together. Assembly of the vibration isolation apparatus 10 is completed by the intermediate cylinder 114, the elastic members 116, and the inner cylinder 130 which are integrally formed, being forced into the outer cylinder 112, and finally by both ends of the outer cylinder 112 being pressed inwardly.

Even if vulcanization causes an error in the shape of the elastic members 116, the inner cylinder 124 is fixed by the pin of the molding apparatus (not shown), and, thereafter, resin is filled in to form the cylinder 130. The shape of the elastic members 116 thus has no effect on the position of the inner cylinder 124 with respect to the outer cylinder 112. Namely, highly accurate positioning of the inner cylinder 124 with respect to the outer cylinder 112 can be obtained.

Since compressive stress is applied to the elastic members 116 of the assembled vibration isolation apparatus 10, it is difficult for cracks to form in the elastic members 116, and the deterioration of adhesive bonding by vulcanization can be prevented. Moreover, tensile stress acting on the elastic members 116 can be reduced when the inner cylinder 124 is vibrated. As a result, durability of the vibration isolation apparatus 10 can be improved.

If the outer cylinder 112 is mounted to a vehicle body (not shown) and the inner cylinder 124 is connected to an engine (not shown), vibration generated by the engine can be transmitted to the elastic members 116 via the inner cylinder 124 and the thin-layer rubber 128. At this time, if the engine vibration has a high frequency and small amplitude, the small amplitude vibration causes the flexible thin-layer rubber 128 to deform elastically so as to damp the vibration by an inner frictional resistance of the thin-layer rubber 128. On the other hand, if the engine vibration has a low-frequency large amplitude, the vibration is transmitted to the elastic members 116 via the inner cylinder 124 and the thin-layer rubber 128. Consequently, the vibration can be damped by the inner frictional resistance of the elastic members 116 which are elastically deformed so that the vibration transmitted to the vehicle body is damped.

Moreover, when the magnitude of the relative movement between the intermediate cylinder 114 and the inner cylinder 124 in the directions indicated by arrows A, B in Fig. 9 becomes extremely large, the projections 122 contact the inner periphery of the outer cylinder 112. Because the expanding frames 132 are provided in the elastic members 116, the magnitude of deformation of the elastic members 116 and the projections 122 and the magnitude of displacement of the inner cylinder 124 are limited. Therefore, no large tensile force acts on the elastic members 116 so that generation of cracks and separation of portions which are adhesively bonded can be avoided.

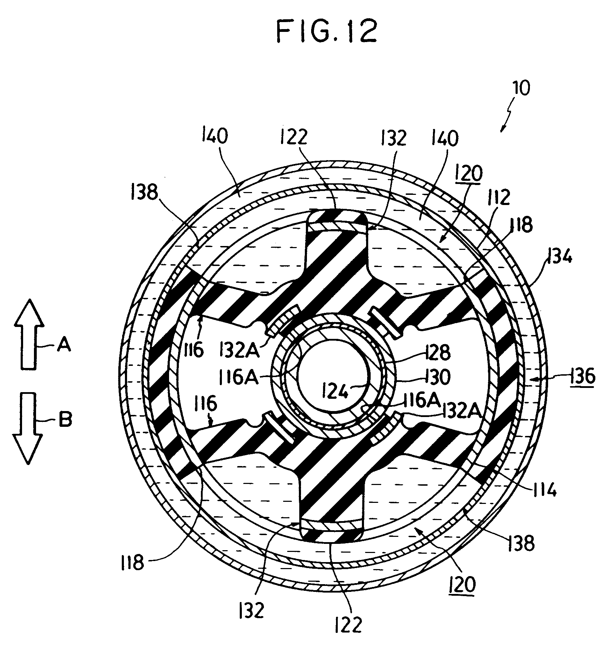

Fig. 12 illustrates a sixth embodiment of the vibration isolation apparatus 10 of the present invention. In this embodiment, the same reference numerals are used for structures similar to those of the fifth embodiment, and description of the structures is omitted.

In the sixth embodiment, a cylindrical member 134 is arranged outside the outer cylinder 112 coaxially with the outer cylinder 112. The respective axial ends of the outer cylinder 112 and those of the cylindrical member 134 are connected by and tightly covered by sealing members (not shown). A ring path 136 is defined between the outer cylinder 112 and the cylindrical member 134. Further, the outer cylinder 112 has holes 138 at the positions corresponding respectively to the pocket portions 120 of the elastic members 116. The respective pocket portions 120 communicate with each other through the holes 138 and the ring path 136. In addition, a fluid 140 such as silicon oil is filled into the pocket portions 120 and the ring path 136.

In this vibration isolation apparatus 10, respective pocket portions 120 are connected to each other through the cylinder 130 and the inner cylinder 124. Consequently, if the inner cylinder 124 is vibrated vertically (in the directions indicated by arrows A, B in Fig. 12) with respect to the outer cylinder 112, one of the pocket portions 120 is compressed and the other pocket portion 120 is expanded. Therefore, positive pressure acts on the fluid 140 which is filled into one of the pocket portions 120 of the elastic members 116, and negative pressure acts on the fluid 140 which is filled into the other pocket portion 120. Accordingly, the fluid 140 is transmitted from the pocket portion 120 on which positive pressure acts to the other pocket portion 120 on which negative pressure acts. As a result, absorption of the vibration can be improved by flow resistance which is generated when the fluid 140 flows back and forth through the ring path 136.

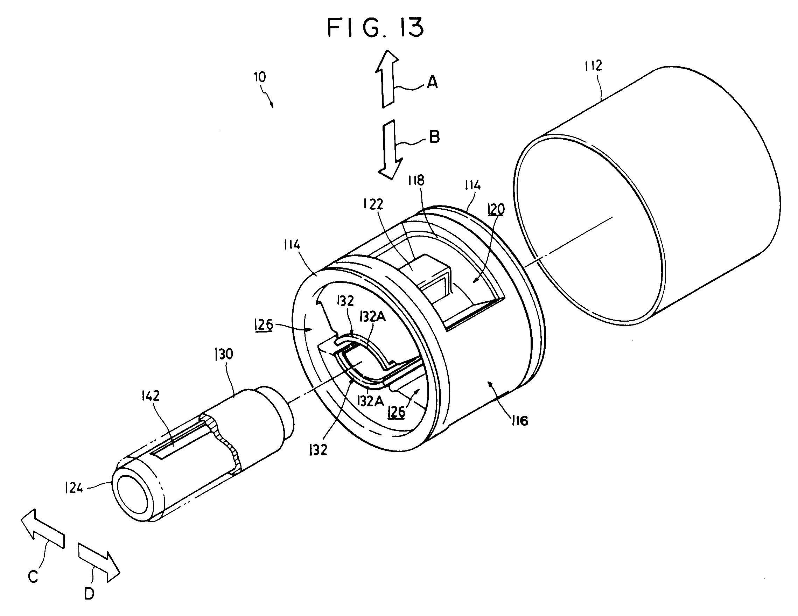

Fig. 13 illustrates a seventh embodiment of the vibration isolation apparatus 10 of the present invention. In this embodiment, the same reference numerals are used for structures similar to those of the fifth embodiment and description of the structures is omitted. The thin-layer rubber 128 which is provided on the outer periphery of the inner cylinder 124 in the fifth embodiment is omitted in the seventh embodiment. Instead, a pair of axial grooves 142 are provided on the longitudinal intermediate portion on the sides facing the directions shown by arrows A and B of the inner cylinder 124, and the cylinder 130 is provided directly on the outer periphery of the inner cylinder 124.

In this case, since a resin of the cylinder 130 is filled into the grooves 142 of the inner cylinder 124, the cylinder 130 is rigidly fixed on the inner cylinder 124. Movement of the inner cylinder 124 can reliably be transmitted to the elastic members 116.

In the seventh embodiment, although the axial grooves 142 are provided on the outer periphery of the inner cylinder 124, the present invention should not be limited to the same. For example, the grooves may be provided along the circumferential direction on the outer periphery of the inner cylinder 124, or an uneven outer periphery may be formed by a knurling. In this case, the cylinder 130 is also rigidly fixed on the inner cylinder 124 so that the connection there between does not come loose.

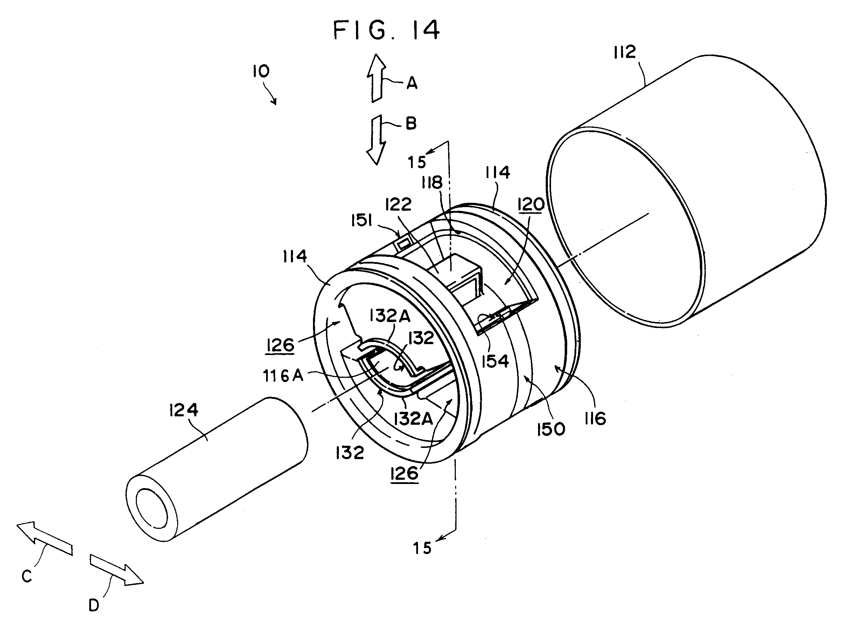

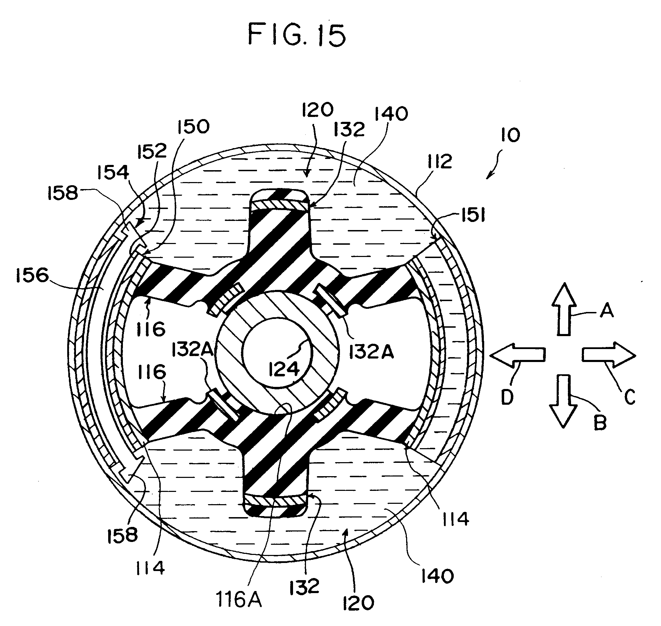

Figs. 14 and 15 illustrate an eighth embodiment of the vibration isolation apparatus 10 of the present invention.

As shown in Fig. 15, the vibration isolation apparatus 10 of the embodiment comprises the inner cylinder 124 directly fixed to the arc surfaces 116A of the elastic members 116 by an adhesive, and the pocket portions 120 into which the fluid 140 is filled.

As shown in Figs. 14 and 15, through-pipes 150, 151 are embadded in the elastic members 116 along the outer periphery of the intermediate cylinder 114 in the directions as indicated by arrows C, D in Fig. 15. The through-pipes 150, 151 comprise rectangular pipes made of resin. One end of each of the pipes is connected to the pocket portion 120 located in the direction indicated by arrow A in Fig. 15. The other ends of the pipes are connected to the pocket portion 120 located in the direction indicated by arrow B in Fig. 15. Further, a movable body 154 is inserted into a through-path 152 in the through-pipe 150. The movable body 154 has an intermediate portion 156 having an outer diameter smaller than the through-path 152 and having a length slightly longer than that of the through-path 152. Further, the movable body 154 has stoppers 158 formed with larger diameters than the through-path 152 at both ends of the intermediate portion 156.

In the vibration isolation apparatus 10 of the eighth embodiment, if engine vibration is a low-frequency vibration, the vibration can be absorbed by the inner frictional resistance of the elastic members 116. Simultaneously, the damping effect can be improved by flow resistance which is generated when the fluid 140 flows back and forth through the through-pipe 151.

If the engine vibration is high-frequency vibration, the through-path 151 becomes cloged. At this time, since the movable body 154 is slightly vibrated longitudinally to limit the rise in pressure of the fluid 140 in the pocket portions 120, a lower dynamic spring constant can be obtained. As a result, the vibration isolation apparatus 10 of the eighth embodiment can effectively damp high-frequency vibrations and low-frequency vibrations.

As can be understood from the discussion set forth above, the vibration isolation apparatus of the present invention has an excellent effect in that durability of the elastic members can be improved and vibration can be reliably transmitted to the elastic members depending on the compressive force applied to the elastic members.

## Claims

1.  A vibration isolation apparatus comprising:

    a first fitting member having a cylindrical body and connected to one of a vibration producing portion and a vibration receiving portion;

    an elastic means being comprised of a plurality of elastic members, said elastic members provided within an inner periphery of said first fitting member and related to said inner periphery of said first fitting member at different positions of said inner periphery;

a second fitting member provided between said elastic members by forcing said elastic members in a free state toward said first fitting member, and connected to the other of the vibration producing portion and the vibration receiving portion; and

supporting means independently provided for a plurality of said elastic members respectively and supporting said second fitting member with said elastic members.

2.    A vibration isolation apparatus according to Claim 1, wherein said supporting means comprise connecting means for connecting said second fitting member to said elastic members by engaging with said second fitting member.

3.    A vibration isolation apparatus according to Claim 1, wherein said supporting means are embedded in said elastic members to support said second fitting member via said elastic members.

4.    A vibration isolation apparatus according to Claim 3, wherein a resin is filled into a space between said second fitting member and a portion of each of said elastic members positioned in the axial direction with respect to said supporting means, whereby said elastic members and said second fitting means are rigidly fixed.

5.    A vibration isolation apparatus according to Claim 2, wherein said connecting means comprises engaging portions at both ends along the circumstantial direction of said first fitting member and engages said second fitting member via said engaging portions.

6.    A vibration isolation apparatus according to Claim 5, wherein said second fitting member has a groove and is engaged to said connecting means by an insertion of said engaging portions of said connecting means into said groove.

7.    A vibration isolation apparatus according to Claim 6, further comprising:

a cylindrical member having an inner periphery provided coaxially with an outer periphery of said first fitting member in order to correspond to other periphery, and a ring path being provided between said first fitting member and said cylindrical member.

8.    A vibration isolation apparatus according to Claim 7, wherein said first fitting member has a through-hole, fluid is filled into said ring path and a space defined by said elastic members and said first fitting member, and the fluid is provided so as to be able to flow through the space and said ring path via said through-hole when said first fitting member and said second fitting member are relatively displaced.

9.    A vibration isolation apparatus according to Claim 2, wherein said connecting means has an expanding member, and forces said elastic members toward said first fitting member in a state of engagement between said connecting means and said second fitting means.

10.    A vibration isolation apparatus according to Claim 9, further comprising:

a cylindrical member having an inner periphery provided coaxially with an outer periphery of said first fitting member in order to correspond to other periphery, and a ring path provided between said first fitting member and said cylindrical member.

11.    A vibration isolation apparatus according to Claim 10, wherein said first fitting member has a through-hole, fluid is filled into said ring path and a space defined by said elastic members and said first fitting member, and the fluid is provided so as to be able to flow through the space and said ring path via said through-hole when said first fitting member and said second fitting member are relatively displaced.

12.    A vibration isolation apparatus according to Claim 4, wherein said second fitting member comprises a cylindrical body and has a thin-layer rubber member provided on an outer periphery of said second fitting member in order to damp high-frequency small amplitude vibration.

13.    A vibration isolation apparatus according to Claim 12, wherein said second fitting member is adhesively bonded by filling a resin between said thin-layer rubber member and said elastic members.

14.    A vibration isolation apparatus according to Claim 13, further comprising:

a cylindrical member having an inner periphery provided coaxially with an outer periphery of said first fitting member in order to correspond to other periphery and a ring path provided between said first fitting member and said cylindrical member.

15.    A vibration isolation apparatus according to Claim 14, wherein said first fitting member has a through-hole, fluid is filled into said ring path and a space defined by said elastic members and said first fitting member, and the fluid is provided so as to be able to flow through the space and said ring path via said through-hole when said first fitting member and said second fitting member are relatively displaced.

16. A vibration isolation apparatus according to Claim 4, wherein said second fitting member comprises a cylindrical body and a notch being provided along the axis provided on the outer periphery of said second fitting member, and a resin is filled between said second fitting member and said elastic member so as to be filled into said notch, so that said second fitting member and said elastic member are fixed together.

17. A vibration isolation apparatus according to Claim 3, wherein said second fitting member comprises a cylindrical body, and an adhesive is applied between said second fitting member and a part of said elastic member which is positioned at a side nearer to the axis than said supporting means, whereby said elastic members and said second fitting member are rigidly fixed.

18. A vibration isolation apparatus according to Claim 17, further comprising:
     a through-pipe provided between a plurality of spaces defined by said elastic members and said first fitting member, wherein fluid is provided so as to be able to flow between the spaces when the fluid is filled into the spaces.

19. A vibration isolation apparatus according to Claim 18, wherein a movable body having a diameter smaller than that of said through-pipe is inserted into a part of said through-pipe, said movable body being longitudinally displaced through said through-pipe to damp high-frequency vibration.

FIG. I

# FIG. 2

## FIG. 3

## FIG. 4

# FIG. 5

# FIG. 6

EP 0 499 996 A1

# FIG. 7

# FIG. 8

FIG. 9

# FIG. 10A

FIG. IOB

FIG.11

EP 0 499 996 A1

# FIG.12

# FIG. 13

EP 0 499 996 A1

FIG. 14

## FIG. 15

# PRIOR ART

## FIG. 16 A

## FIG. 16 B

FIG. 17

**PRIOR ART**

101

105

18

109

103

109

18

EP 0 499 996 A1

28

# PRIOR ART

## FIG. 18 A

## FIG. 18 B

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 384 007 (FREUDENBERG) | 1,7,8,12 | F16F13/00 |
| A | * column 1, line 19 - line 44; claim 1; figures * | 9,10, 13-15 | F16F1/38 |
| | --- | | |
| A | US-A-4 838 529 (ORIKAWA ET AL) | 1,3,7,8, 10,11, 14,15, 18,19 | |
| | * column 2, line 55 - column 3, line 48; claims; figure 4A * | | |
| | --- | | |
| A | US-A-3 694 895 (WERNER) * column 2, line 49 - column 3, line 10; figure 3 * | 1-4,13 | |
| | --- | | |
| A | PATENT ABSTRACTS OF JAPAN vol. 12, no. 141 (M-691)(2988) 28 April 1988 & JP-A-62 261 731 ( TOKAI RUBBER ) 13 November 1987 * abstract * | 1 | |
| | --- | | **TECHNICAL FIELDS SEARCHED (Int. Cl.5 )** |
| A | DE-A-3 731 004 (BRIDGESTONE) | | |
| | ----- | | F16F |

The present search report has been drawn up for all claims

| Place of search | Date of completion of the search | Examiner |
|---|---|---|
| THE HAGUE | 04 JUNE 1992 | NORDLUND J.O. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)